Europäisches Patentamt

European Patent Office

Office européen des brevets

(19)

(11) **EP 1 092 895 A2**

(12) ## EUROPEAN PATENT APPLICATION

(43) Date of publication:
**18.04.2001 Bulletin 2001/16**

(51) Int Cl.⁷: **F16H 61/00**

(21) Application number: **00308946.3**

(22) Date of filing: **11.10.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **12.10.1999 JP 28937699**

(71) Applicant: **ISUZU MOTORS LIMITED
Shinagawa-ku, Tokyo (JP)**

(72) Inventor: **Inoue, Eiji, Isuzu Motors Limited
Fujisawa-shi, Kanagawa (JP)**

(74) Representative: **Jenkins, Peter David et al
PAGE WHITE & FARRER
54 Doughty Street
London WC1N 2LS (GB)**

(54) **Toroidal continuously-variable transmissions**

(57)     A toroidal continuously-variable transmission is disclosed wherein the contact pressure at areas in rolling-contact between power rollers and any of input and output disks is regulated depending on both of the speed ratio and transmitted torque whereby a pressing effort to develop the contact pressure may be kept at minimum required, so that the rolling-contact areas are less subject to excessive rolling fatigue. A speed-ratio control system(109) has a lever(118), lift of which varies according to a pivoting angle of a trunnion, which reflects the speed ratio of the toroidal continuously-variable transmission. A pressure-difference control system(110) has a corrected reference-pressure setting valve(111) and a hydraulic pressure energizing means(112), which are applied with a pressure difference($\Delta P$) in a hydraulic actuator that moves the trunnion in a direction of its pivotal axis according to the transmitted torque, thereby developing a corrected reference pressure(Pmf) in keeping with a balance of rods(121,122) connected with the lever(118). The corrected reference pressure(Pmf) serves to modify a line-pressure supplied to a hydraulically actuated loader to press the input and output disks together against the power rollers disposed between them.

*FIG. 1*

**Description**

The present invention relates to a toroidal continuously-variable transmission in which there is provided a hydraulically actuated loader to transmit the torque of an input shaft to an output shaft with infinitely variable gear ratios through a power train consisting of confronting input and output disks, which are connected drivingly with each other by power rollers.

Among the conventional continuously-variable transmissions is known a toroidal continuously-variable transmission having either only one or at least two toroidal transmission units arranged along the common centerline, each of which is comprised of an input disk driven by an input shaft, an output disk arranged in opposition to the input disk and connected to an output shaft, and power rollers coming into frictional rolling-contact with both the input and output disks. In the toroidal continuously-variable transmissions constructed as described above, changing the pivot angle of the power roller allows to transmit the torque of the input disk to the output disk with infinitely variable gear ratios.

Most conventional toroidal continuously-variable transmissions are commonly provided with a loading cam to adjust the contact pressure between the power roller and either of the input and output disks, depending on the magnitude of the torque applied from the engine. In such a design that the whole torque of the engine is applied to the toroidal continuously-variable transmission, the loading cam may exert the contact pressure proportional directly to the input torque to provide the enough tractive effort at the rolling-contact areas between the power roller and its associated disks so that the rolling-contact areas are less subject to excessive rolling fatigue. In contrast, there is another design in which a part of torque from the engine is applied directly to the output shaft, with going around the toroidal continuously-variable transmission depending on the vehicle running conditions. Since the torque transmitted through the toroidal continuously-variable transmission in the latter design is in disaccord with the entire torque from the engine, slippage occurs in the rolling-contact areas as the tractive effort exerted at the rolling-contact areas decreases, and moreover the excessive tractive effort is apt to raise much rolling fatigue at the areas in rolling-contact.

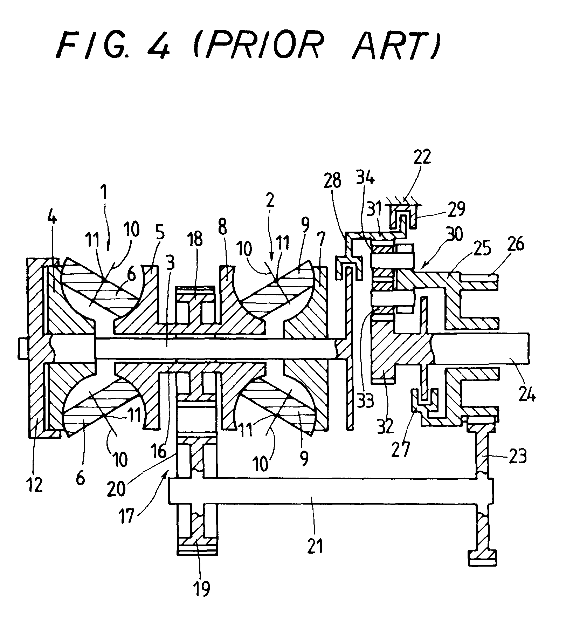

To cope with this, an improved toroidal continuously-variable transmission has been proposed, in which a hydraulically actuated loader is employed in place of the prior loading to press the input and output disks against the power rollers disposed between them. The contact pressure between the power rollers and the disks is regulated hydraulically depending on the magnitude of torque transmitted through the toroidal transmission unit. Referring to FIG. 4, there is shown an exemplar of the toroidal continuously-variable transmission with the hydraulically actuated loader, which is of a double-cavity construction including first and second toroidal transmission units 1, 2 arranged in series on a common centerline of a main shaft 3. The first toroidal transmission unit 1 is comprised of an input disk 4, an output disk 5 arranged confronting the input disk 4, and a pair of power rollers 6 disposed between the confronting disks 4, 5 with coming in frictional rolling-engagement with toroidal surfaces of the disks 4, 5. The second toroidal transmission unit 2 is constructed in the same manner as the first toroidal transmission unit 1, and comprised of an input disk 7, an output disk 8 arranged in opposition to the input disk 7, and a pair of power rollers 9 disposed between the confronting disks 7, 8 with coming in frictional rolling-engagement with toroidal surfaces of the disks 7, 8. The power rollers 6, 9 are each for rotation on its own rotating axis 10 and also supported for pivoting motion about its associated pivotal axis 11 that is normal to the rotating axis 11 or normal to the plane surface of this paper.

The power from the engine is applied to the main shaft 3 through a hydraulically actuated loader 12. The input disk 4 turning in unison with the main shaft 3 acts as a piston of the hydraulically actuated loader 12 for pressing the power rollers 6 of the first toroidal transmission unit 1, depending on the magnitude of hydraulic pressure exerted by the hydraulically actuated loader 12, and also causes the reaction where a cylinder of the hydraulically actuated loader 12 thrusts the input disk 7 in the second toroidal transmission unit 2, which turns together as an unit with the main shaft 3, against the power rollers 9 through the main shaft 3. Thus, the main shaft 3 serves the input shaft common to both the input disks 4, 7. The thrust force exerted by the hydraulically actuated loader 12 squeezes the power rollers 6, 9 between the paired confronting input and output disks 4, 7 and 5, 8 to provide the frictional traction force depending on the magnitude of the transmitted torque.

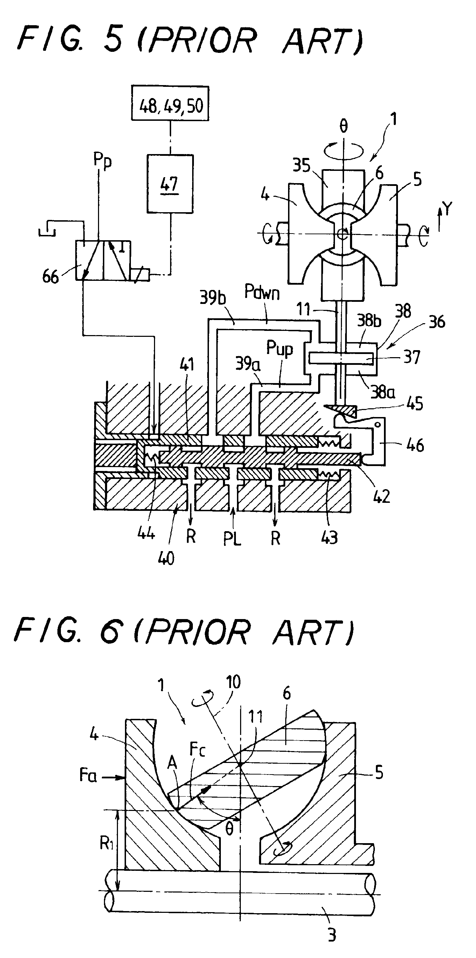

The rotation of the input disks 4, 7 in the toroidal transmission units 1, 2 is transmitted with infinitely variable gear ratios or speed ratios to the output disks 5, 8 by virtue of the power rollers 6, 9 that may pivot about their pivotal axes 11. The power roller 6, 9 are supported on trunnions, shown at 35 in FIG. 5, for rotating and pivoting motions so as to deal with the axial movement of the main shaft 3, which might occur due to the thrust force exerted by the loader.

In neutral position where the rotating axes 10 of the power rollers 6, 9 intersect with the axis of the main shaft 3, the speed ratio is kept at a value that is in compliance with any pivotal angle of the power rollers 6, 9. If the trunnions are moved together with the power rollers 6, 9 along the axial direction of the pivotal axes 11 during torque transmission, the rolling-contact areas of the power rollers 6, 9 with the input and output disks 4, 7 and 5, 8 deviate from the contact areas at the neutral position. As a result, the power rollers 6, 9 experience the pivoting forces exerted by the disks 4, 7 and 5, 8 so as to pivot on their pivotal axes 11 with the direction and velocity, which depend on the direction and amount of their displacements along the pivotal axes 11. This pivoting motion of the power rollers 6, 9 causes the variations in the ratio between a radius defined by loci of the rolling-contact locations of the power rollers with the input disks 4, 7 and another radius defined by loci of the rolling-contact locations of the power rollers with the output disks 5, 8 whereby the speed ratio may be changed in a continuously variable manner. The pivoting motion of the power rollers 6, 9 may be adjusted by a controller unit, shown at 47 in FIG. 5, which controls the displacements of the trunnions along the pivotal axes 11 through the operation of a hydraulic actuator, shown at 36 in FIG. 5, so as to attain the desired speed ratio.

The output disks 5, 8 are arranged back to back and connected to the connecting shaft 16 through the spline fit or the like to turn together as an unit. The connecting shaft 16 is of a hollow tube in which the main shaft 3 is fitted for rotation relatively to each other. The output disks 5, 8 are supported at the connecting shaft 16 on a casing 22 through bearings, not shown, which may bear both the thrust and radial loads. The torque transmitted to the output disks 5, 8 is applied through a chain gearing 17 to a countershaft 21 arranged in parallel with the main shaft 3. The chain gearing 17 is composed of a sprocket wheel 18 mounted integrally midway the connecting shaft 16, a sprocket wheel 19 supported integrally on one end of the countershaft 21, and an endless chain 20 wound around the sprocket wheels 18, 19.

The countershaft 21 has on its opposite end an output gear wheel 23, which is in turn meshed with a gear wheel 26 formed around a carrier 25 that is supported for rotation on an output shaft 24. The carrier 25 is allowed to come into engagement with the output shaft 24 through a starting clutch 27. A high-range clutch 28 is arranged on the main shaft 3 at the end axially opposite to the hydraulically actuated loader 12 with respect to the toroidal transmission units, while a reverse brake 29 is disposed between the output side of the high-range clutch 28 and the casing 22. The high-range clutch 28 is drivingly connected at its output side with the output shaft 24 through a double-pinion planetary gearset 30, which is comprised of a ring gear 31 formed integrally to the output side of the high-range clutch 28, a sun gear 32 made integral with the output shaft 24, and two pinions 33, 34 supported for rotation on the carrier 25 and juxtaposed radially between the ring gear 31 and the sun gear 32 in mesh with one another.

The following explains the operation of the toroidal continuously-variable transmission constructed as described just above. To get the vehicle starting to move, the starting clutch 27 is thrown into engagement in such a manner that the engaging pressure rises gradually from a low level where the clutch slips momentarily while engaging to a high level where the engagement is completed with all slipping having stopped. Both the high-range clutch 28 and the reverse brake 29 remain still disengaged. Thus, the power train is established in which the torque of the engine flows through the main shaft 3, toroidal transmission units 1, 2: the input disks 4, 7, power rollers 6, 9 and output disks 5, 8, and further flowing through the connecting shaft 16, chain gearing 17, countershaft 21 and starting clutch 27 to the output shaft 24, which results in turning in the same direction as the main shaft 3.

With the high-range operation mode, the high-range clutch 28 comes into engagement while both the starting clutch 27 and the reverse brake 29 are disengaged. Rotation of the main shaft 3 is transmitted to the planetary gearset 30 through the high-range clutch 28. On the other hand, the main shaft 3 rotates the carrier 25 in the same direction as the main shaft 3 through the toroidal transmission units 1, 2 and the countershaft 21. Thus, the output speed of the output shaft 24 connected to the sun gear 32 of the planetary gearset 30 varies with the revolving speed of the carrier 25. To get the reverse operation mode, the reverse brake 29 comes into engagement while both the starting clutch 27 and the high-range clutch 28 are made inoperative. As the ring gear 31 in the planetary gearset 30 is made locked against rotation, the rotation of the main shaft 3 is applied through the toroidal transmission units 1, 2 and the countershaft 21 to the output shaft 24. This rotates the output shaft 24 in the reverse direction to the main shaft 3. Although but the double-pinion planetary gearset 30 is shown in the illustrative embodiment, it will be appreciated that any single-pinion type may be used, in which the output shaft 24 is, as opposed to the double-pinion type, driven in the same direction as the main shaft 3.

Referring next to FIG. 5, there is shown a speed-ratio control system for the toroidal transmission unit 1 in the toroidal continuously-variable transmission. The paired power rollers 6, 6, only any one of them being shown, are disposed between the input and output disks 4, 5 in opposition to one another and supported for rotation about their own rotating axes 10, each of which is mounted for pivoting motion on a pivot axis, not shown, supported by the associated member 35 what is commonly referred to as a trunnion. This construction makes it possible to pivot the power rollers 6, 6, depending on the shift relatively to the axial direction of the input and output disks. The individual trunnion 35 is supported on a transmission casing, shown at 22 in FIG. 4, in such a manner as to be able to make not only the pivoting motion around the associated pivoting axis 11, but also the linear shift in the axial direction of the pivoting axis 11.

A hydraulic actuator 36 is to move up an down the trunnion 35 along the axial direction of the pivoting axis 11 and composed of a piston 37 connected to the trunnion 35, and a hydraulic cylinder 38 formed in the transmission casing 22 to accommodate therein the piston 37 for sliding movement. The hydraulic cylinder 38 is divided into two cylinder chambers: an acceleration chamber 38a and deceleration chamber 38b with the piston 37. Although but the hydraulic actuator 36 in the embodiment shown is arranged on the lowest end of the trunnion 35, it will be appreciated that the cylinder chambers may be separately arranged on the opposite ends of the trunnion 35, each to each end.

The cylinder chambers 38a, 38b are each communicated through hydraulic conduits 39a, 39b with a spool-type control valve, which serves a speed-ratio control valve 40 in the toroidal continuously-variable transmission. The speed-ratio control valve 40 has therein a sleeve 41 that is urged by a spring 43 towards the left side in the drawing, and a valve spool 42 accommodated in the sleeve 41 and forced rightward by a spring 44. The speed-ratio control valve 40 is open to a line-pressure PL. Any one of the hydraulic conduits 39a and 39b is communicated selectively with the line-pressure PL while the other of the hydraulic conduits 39a and 39b is open to a reservoir R, depending on the relative position of the valve spool 42 with the sleeve 41. Communicating the hydraulic conduit 39a with the line-pressure PL results in exposing the acceleration chamber 38a to a hydraulic pressure Pup, whereas the deceleration chamber38b is subjected to a hydraulic pressure Pdwn when the hydraulic conduit 39b is communicated with the line-pressure PL.

Any one of the pivotal axes 11, 11 is provided at its one end with a precessional cam 45, against which is abutted one extremity of a lever 46 that is pivoted at its midway point and also abutted at its opposite extremity to the valve spool 42 of the speed-ratio control valve 40. The precessional cam 15 measures the resultant displacement of an axial-linear displacement Y and an angular displacement θ of the pivotal axis 11 supported on the trunnion 35. The valve spool 42 is moved depending on the resultant displacement to change its position with respect to the sleeve 41, thereby opening selectively the line-pressure PL to any one of the hydraulic conduits 39a and 39b.

In the toroidal continuously-variable transmission as described just above, when the trunnion 35 is displaced from its neutral position towards any one direction along the pivotal shaft, or the axial direction of the pivotal axis 11, the power rollers 6, 9 move to thereby shift the rolling-contact areas of the input and output disks 4 and 7, 5 and 8 with the power rollers 6, 9. Owing to the characteristic in which the trunnion 35 pivots about the pivotal axis 11 with the direction and speed that are defined depending on the direction and amount of the displacement along the pivotal axis 11, the speed-ratio control is achieved by regulating the pivoting motion of the trunnion 35. The controller unit 47 is applied with signals regarding the speed-changing information such as the rotational frequency of the output shaft, the engine rpm, the depression of the accelerator pedal or the like, which are reported from various sensors measuring the vehicle operating conditions such as an output shaft rpm sensor 48, engine rpm sensor 49, accelerator-pedal depression sensor 50, and so on. As an alternative, a vehicle speed sensor may be used in place of the output shaft rpm sensor 48 and also a throttling sensor may be employed in place of the accelerator-pedal depression sensor 50. The control unit 47 finds a desired speed ratio on the basis of the signals regarding the speed-changing information representing the vehicle operating conditions. A solenoid-operated valve 66 to set the speed ratio is governed in accordance with the desired speed ratio found, thereby to adjust a pilot pressure Pp to a pressure complying with the desired speed ratio, which is in turn applied to the sleeve 41 of the speed-ratio control valve 40 at its one end opposite to the spring 43. That is to say, the position of the sleeve 41 in the speed-ratio control valve 40 represents the desired speed ratio while the position of the valve spool 42 is the actual speed ratio. Thus, the speed-ratio control valve 40 operates so as to bring the actual speed ratio into the desired speed ratio.

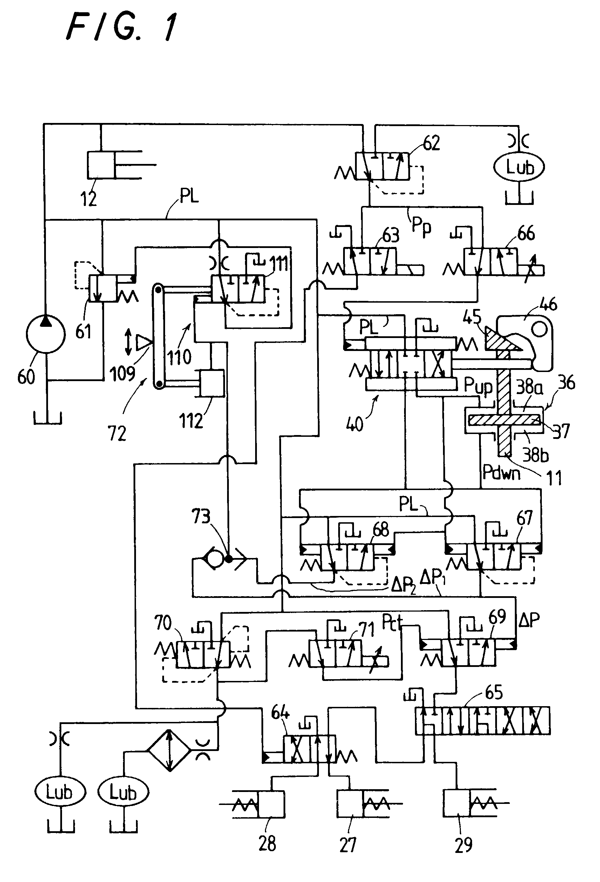

With the toroidal continuously-variable transmission constructed as described above, the input and output disks 4 and 5, 7 and 8 are pressed together against the power rollers 6, 9 with the contact pressure exerted by the hydraulically actuated loader 12. Referring to FIG. 1 explaining the toroidal transmission unit 1, the contact pressure Fc normal to the surfaces in contact area A varies in accordance with the transmitted torque Te and the speed ratio in the continuously-variable transmission. As there is arranged a pair of power rollers 6, it follows that

$$Fc = Fa/2\sin\theta \qquad\qquad (Eq.1)$$

where Fa is the thrust force exerted by the hydraulically actuated loader 12, and θ is a pivoting angle of the pivotal axis 11. The transmitted torque Te is given by

$$Te = Fc \cdot \mu_t \cdot n_p \cdot R1 \qquad\qquad (Eq.2)$$

where Fc is the contact pressure normal to the surfaces A in contact, $\mu_t$ is coefficient of traction, which is dependent on a special traction fluid, that is, multiplication of the contact pressure Fc by the coefficient of traction $\mu_t$ gives a tangent force, $n_p$ is the number of the power roller ($n_p$ = 4 in FIG. 1), and R1 is a radius at the surfaces A in contact.

Combining the above Eq.1 and Eq.2 gives

$$Fa = (2\sin\theta \cdot Te) / (R1 \cdot n_p \cdot \mu_t) \qquad\qquad (Eq.3)$$

If the speed ratio were kept constant, that is to say, geometric conditions (θ, R1) at the contact area A were constant and the transmitted torque were also made constant, the state where the thrust force Fa exerted by the hydraulically actuated loader is below an adequate value, that is, $\mu_t$ becomes large would cause lack or shortage of the contact pressure Fc in the contact area A and thus no torque would be transmitted because much slippage might be caused at the area A in contact. In contrast, if the thrust force Fa were increased excessively beyond the adequate value, that is, $\mu_t$ became large, this would cause premature rolling-fatigue at the areas in contact, thus resulting in shortening the service life of the power rollers 6, 9 and disks 4, 5, 7 and 8. Thus, it is very critical to ensure continually the proper thrust force Fa for the hydraulically actuated loader 12, or continue keeping $\mu_t$ at a preselected value, for providing the toroidal continuously-variable transmission having high reliability.

In the prior toroidal continuously-variable transmission of the type having the hydraulically actuated loader, the pressure exerted on hydraulically actuated loader is commonly regulated on the basis of the torque that has been given on the arithmetic analogy with the torque transmitted to the continuously-variable transmission, depending on the engine rpm, accelerator-pedal depression, and so on sensed at the control unit. Nevertheless, this control system has failed in ensuring the proper thrust effort to the hydraulically actuated loader because the torque measurement is inferior in accuracy, especially, it is very hard to sense with enough accuracy the torque resulting from inertia under the transient phase such as while accelerating. To cope with this, it is common industrial practice to set the thrust force somewhat large, or set $\mu_t$ small, with a factor of safety selected after the uncertainties described just above have been thoroughly considered. However, this raises the major problems of reduced service life, bulky construction and lowered efficiency.

Regarding the toroidal continuously-variable transmission in which a hydraulic pressure developed at a hydraulic pump is adjusted through a regulator valve to a line-pressure, which is then applied to either the input or output disk to press together them against the power rollers disposed between them, and a speed-ratio control valve to change the speed ratio supplies the line-pressure to selectively either hydraulic-operative chambers or hydraulic-inoperative chambers for the trunnions supporting thereon the power rollers for pivoting motion, thereby making the trunnions move up or down along an axial direction of its pivotal axes to change the torque in a continuously variable way, Japanese Patent Laid-Open No. 250657/1989 discloses a concept in which the torque transmitted through the toroidal continuously-variable transmission is converted at the hydraulic-operative chamber into a hydraulic pressure, which is then returned to the regulator valve where there is provided a valve spool that is operatively subjected on its opposite ends to the pressure from the hydraulic-operative chamber and the pressure adjusted in the valve itself, or the line-pressure. Thus, the line-pressure delivered out of the regulator valve is adjusted to make the pressure exerted on the hydraulically actuated loader variable according to the magnitude of the transmitted torque, with resulting in not only reducing a loss in hydraulic pressure but also no slippage occurring at the areas in contact between the power rollers and the disks.

Disclosed in Japanese Patent Laid-Open No. 39848/1993 is another prior toroidal continuously-variable transmission comprised of a toroidal transmission mechanism having power rollers disposed between confronting input and output disks, a loading-cam means to exert the thrust effort on the disk to develop the contact pressure between the power rollers and the disks, and an improved control means wherein a hydraulic cylinder is arranged in parallel with the loading cam, and a line-pressure discharged out of a hydraulic pump is adjusted through a hydraulic pressure valve to another pressure, which is then applied to the hydraulic cylinder while under negative torque, thereby exerting a pressing effort of the hydraulic cylinder in addition to the thrust force caused by the actuation of the loading cam, so that the desirable contact pressure may be ensured even under the negative torque while avoiding the increase in hysteresis of the loading cam. The hydraulic valve is connected with a high-pressure cylinder and a low-pressure cylinder at the opposite ends of a valve spool, each cylinder to each end, to move the trunnion along the axial direction of the pivotal axis, thereby providing the line pressure adjusted.

In Japanese Patent Publication No. 72652/1994 disclosing another prior toroidal continuously-variable transmission in which the power rollers are disposed between the input and output disks, it has been proposed to regulate the contact pressure desired to come in action between the power rollers and the input/output disks, depending on the torque transmitted through the toroidal transmission unit and the pivoting angle of the power rollers, thereby reducing the hydraulic pressure loss and also improving the transmission efficiency, along with providing the long-lasting service time.

Taking into account the prior various modifications in the toroidal continuously-variable transmission in which the hydraulically actuated loader is arranged on either input disk or output disk to urge the power rollers into the friction rolling-contact with the confronting input and output disks, it may be worthwhile considering controlling a hydraulic pressure exerted on the hydraulically actuated loader, depending on speed ratio and transmitted torque, thereby making it possible to ensure a proper coefficient of traction $\mu_t$ on the surfaces in contact between the power rollers and either of the input disks and output disks.

The present invention has for its primary aim to overcome the problems in the prior art as described just above and in particular to provide a toroidal continuously-variable transmission in which there is provided a hydraulically actuated loader on either side of an input and output disks to press the input and output disks against power rollers disposed between them, the improvement wherein the hydraulically actuated loader is made to exert a minimum loading pressure required in keeping with a transmitted torque and a speed ratio, thereby making it possible to reduce rolling fatigue along with compact construction, high reliability and high efficiency.

The present invention is concerned with a toroidal continuously-variable transmission comprising an input disk driven from an engine, an output disk arranged confronting the input disk and connected with an output shaft, power rollers disposed between the confronting input and output disks to come in frictional rolling-contact with them under contact pressure thereby to transmit rotation of the input disk to the output disk in a continuously variable manner, a hydraulically actuated loader arranged on any one of the input and output disks to develop the contact pressure at contact areas between the power rollers and disks, a trunnion supporting thereon the power roller for rotation and allowed to turn about a pivotal axis to change speed ratio according to a shift in position of the contact areas, a hydraulically actuating means to move the trunnion along an axial direction of the pivotal axis to make the trunnion pivot about the pivotal axis, a hydraulic power source to supply a line-pressure to apply regulated pressures to both the hydraulically actuated loader and the hydraulically actuating means, a torque detector means for measuring a torque transmitted through the power rollers, and a line-pressure correction means for correcting the line-pressure supplied from the hydraulic power source, depending on a pivoting angle of the trunnion around the pivotal axis and the transmitted torque measured at the torque detector means, thereby ensuring a constant coefficient of traction at the contact areas.

In accordance with the toroidal continuously-variable transmission of the present invention, the line-pressure correction means realizes the coincidental control of modifying the line-pressure discharged out of the hydraulic power source and of ensuring the constant coefficient of traction at the areas in contact between the power rollers and the input/output disks, depending on both the pivoting angle of the trunnions about the pivotal axes, or the speed ratio and the transmitted torque sensed at the torque detector means. Thus, the hydraulic pressure enough to satisfy the requisite for the hydraulically actuated loader may be ensured automatically, irrespective of changes in the speed ratio and the transmitted torque.

In an aspect of the present invention, a toroidal continuously-variable transmission is disclosed wherein the hydraulically actuating means is applied with a hydraulic pressure governed through a speed-ratio control valve, which regulates in pressure the line-pressure supplied from the hydraulic power source, depending on vehicle operating conditions.

In another aspect of the present invention, a toroidal continuously-variable transmission is disclosed wherein the hydraulically actuating means is a hydraulic actuator having an acceleration cylinder chamber and a deceleration cylinder chamber to move the trunnion axially of the pivotal axis, and the torque detector means is a pressure-difference detector valve to find an absolute value of a pressure difference between the acceleration cylinder chamber and the deceleration cylinder chamber. With taking attention to the fact that the pressure difference between the hydraulic pressures in the acceleration and deceleration chambers of the hydraulic actuator is proportional to the torque transmitted through the toroidal transmission units, the pressure-difference detector valve measures the transmitted torque in terms of the pressure difference between the pressures in the cylinder chambers.

In another aspect of the present invention, a toroidal continuously-variable transmission is disclosed wherein the pressure-difference detector valve is comprised of a first pressure-difference detector valve to provide a first pressure difference of positive sense given by subtracting a hydraulic pressure in the deceleration cylinder chamber from a hydraulic pressure in the acceleration cylinder chamber while a vehicle is in driving condition, a second pressure-difference detector valve to provide a second pressure difference of positive sense given by subtracting a hydraulic pressure in the acceleration cylinder chamber from a hydraulic pressure in the deceleration cylinder chamber while a vehicle is permitted to coast, and a shuttle valve supplied with the first and second pressure differences to send a high hydraulic pressure. The shuttle valve is arranged to measure the absolute value of the pressure difference in order to avoid that the pressure difference changes over to either a positive or negative sense according to whether the vehicle runs under the driving or under engine braking.

In another aspect of the present invention, a toroidal continuously-variable transmission is disclosed wherein the line-pressure correction means is comprised of a speed-ratio control system having a lever made to move according to the pivoting angle of the trunnion, which is allowed to pivot depending on the speed ratio, and a pressure-difference control system coming in engagement with the lever of the speed-ratio control system so as to allow to alter lever ratio, and subjecting the lever to a force corresponding to the pressure difference, which occurs depending on the transmitted torque measured at the pressure-difference detector valve, thereby developing a corrected reference pressure to modify the line-pressure according to a balance of the forces exerted on the lever.

In a further another aspect of the present invention, a toroidal continuously-variable transmission is disclosed wherein the seed-ratio control system is composed of a cam having a cam profile able to provide lift according to the pivoting angle of the trunnion, a follower coming in contact with the cam to make a displacement corresponding to the lift according to the pivoting angle, and the lever connected to the follower to be allowed to pivot around a fulcrum, and the pressure-difference control system is composed of a corrected reference-pressure setting valve and a hydraulic pressure energizing means, the corrected reference-pressure setting valve having a first valve spool allowed to move based on both the corrected reference pressure obtained in the setting valve itself and the pressure difference sensed at the pressure-difference detector valve, and a first rod connected to the first valve spool to communicate a first output proportional to the corrected reference pressure to any one end of the lever, while the hydraulic pressure energizing means having a second valve spool allowed to move based on the pressure difference sensed at the pressure-difference detector valve, and a second rod connected to the second valve spool to communicate a second output proportional to the pressure difference to the opposite end of the lever, and wherein the corrected reference-pressure setting valve develops and outputs the corrected reference pressure, which is a pressure proportional to the product of the pressure difference and a ratio of a distance between the fulcrum and the first rod to a distance between the first and second rods.

In another aspect of the present invention, a toroidal continuously-variable transmission is disclosed wherein the line-pressure correction means has a relief valve to relieve an excessive line-pressure beyond a desired line-pressure that corresponds to the corrected reference pressure issued depending on both the pivoting angle of the trunnion and the transmitted torque sensed at the torque detector means, thereby reducing and modifying the line-pressure to the desired line-pressure.

In the toroidal continuously-variable transmission in which the hydraulically actuated loader is arranged on either one of the input and output disks to press the input and output disks against the power rollers disposed between them, the present invention provides the improvement wherein the hydraulically actuated loader is made to exert a minimum loading pressure required in coincidently keeping with both the transmitted torque and the speed ratio, thereby making it possible to reduce not only rolling fatigue but also power loss at the areas in frictional rolling-contact, along with compact construction, high reliability and high efficiency.

Embodiments of the present invention will now be described by way of example only, with reference to the accompanying drawings, in which:

FIG. 1 is a circuitry diagram illustrating a preferred embodiment of a hydraulic system for a toroidal continuously-variable transmission, in which a hydraulically actuated loader is subject to pressure control in accordance with the present invention:

FIG. 2 is a sectional view showing a line-pressure control valve incorporated in the hydraulic system shown in FIG. 1:

FIG. 3 is a schematic illustration partly in section, of a corrected reference-pressure setting valve employed in the hydraulic system shown in FIG. 1:

FIG. 4 is a schematic illustration partly in section, of a conventional toroidal continuously-variable transmission:

FIG. 5 is a schematic illustration partly in section, of a speed-ratio control system in the toroidal continuously-variable transmission shown in FIG. 4: and

FIG. 6 is a fragmentary schematic view partly in section, illustrating in detail a frictional rolling-contact area in the toroidal continuously-variable transmission shown in FIG. 4.

An embodiment of the toroidal continuously-variable transmission according to the present invention will be explained below with reference to the accompanying drawings. Since the prior toroidal continuously-variable transmission shown in FIGS. 4 and 5 may be equally applied to the present invention, similar reference characters designate similar elements or components in the following description and the previous description will be applicable.

Referring to FIG. 1, there is shown a hydraulic circuitry system for a toroidal continuously-variable transmission. A hydraulic source of a hydraulic pump 60 creates a line-pressure PL, the magnitude of which is adjusted by a line-pressure control valve 61 of a pressure relief valve. The line-pressure PL leads partly to the hydraulically actuated loader 12 to press the input disks 4, 7 against the power rollers 6, 9 in the toroidal transmission units 1, 2. Moreover, the line-pressure PL is partly lowered to a preselected pilot pressure Pp through a pilot valve 62. Then, the pilot pressure Pp is applied to a mode solenoid valve 63. A mode control valve 64, when supplied with the pilot pressure Pp in response to the operation of the mode solenoid valve 63, drains the hydraulic pressure applied to the starting clutch 27 and allows the high-range clutch 28 to communicate with an output port of a manual valve 65, which is manipulated by a driver. In contrast, when the mode solenoid valve 63 operates to drain an input port of the mode control valve 64, the hydraulic pressure supplied to the high-range clutch 28 is allowed to drain while the starting clutch 27 is thrown into the communicates with the manual valve 65.

The pilot pressure Pp is supplied partly to a speed-ratio setting solenoid valve 66 where its solenoid is governed by the control unit 47 in accordance with the vehicle operating conditions to feed a speed-ratio control valve 40 with a hydraulic pressure corresponding to the set speed ratio. The resultant displacement monitored at the precessional cam 45, as apparent in FIG. 5, is communicated mechanically to the valve spool 42 of the speed-ratio control valve 40 through a lever 46. According to the operation of the speed-ratio control valve 40, any one of either the acceleration chamber 38a or the deceleration chamber 38b of the hydraulic actuator 36 is applied with the line-pressure PL while the other is drained.

Pressure Pup in the acceleration chamber 38a and pressure Pdwn in the deceleration chamber 38b are applied to a first pressure-difference detector valve 67 for measuring torque while driving the vehicle and a second pressure-difference detector valve 68 for measuring torque while permitting the vehicle to coast, respectively. An absolute value of a pressure difference between the pressure Pup in the acceleration chamber 38a and the pressure Pdwn in the deceleration chamber 38b: $|\Delta P|$ ( $= |$ Pup - Pdwn $|$ ) is in proportion to the torque transmitted at the toroidal transmission units 1, 2. The transmitted torque while starting to move is also measured at the first pressure-difference detector valve 67 in terms of the pressure difference $\Delta P$ proportional to the torque and then output. The first and second pressure-difference detector valves 67, 68 are each made of a spool-type control valve having a spring-urged spool, the output pressure difference $\Delta P$ of which is added to either the pressure Pup in the acceleration chamber 38a or the pressure Pdwn in the deceleration chamber 38b in a feedback manner. The pressure difference is in either a positive or negative sense according to either while driving or while coasting. Thus, while driving, the first pressure-difference detector valve 67 reduces the line-pressure PL to apply a first pressure difference $\Delta P_1 (=$ Pup- Pdwn) of positive sense to the output port. While coasting, in contrast, the second pressure-difference detector valve 68 issues a second pressure difference $\Delta P_2$ (=Pdwn - Pup) of positive sense. A shuttle valve 73 sends always any higher positive pressure out of the pressure differences $\Delta P$ measured at the pressure-difference detector valves 67, 68: the first pressure difference $\Delta P_1$ sensed at the pressure-difference detector valves 67 while driving, the second pressure difference $\Delta P_2$ sensed at the pressure-difference detector valves 68 to a line-pressure correction means 72, which is arranged at a delivery side of the hydraulic pump 60 to correct the line-pressure PL according to the torque measured.

A engaging-pressure control valve 69 is applied at its one end with the pressure difference $\Delta P_1$ sent out of the first pressure-difference detector valve 67 and at the opposite end with a desired engaging-pressure signal Pct, which is a pressure signal obtained by adjusting an output pressure of a line-pressure regulating valve 70 through a starting solenoid valve in accordance with the vehicle operating conditions. Generally speaking, the desired engaging-pressure signal Pct represents a desired pressure that is decided by the control unit 47 so as to vary with a lapse of time, depending on, for example, an amount of the acceleration-pedal depression or vehicle speed. The engaging-pressure control valve 69 is made of a spool-type control valve having a spring-urged valve spool.

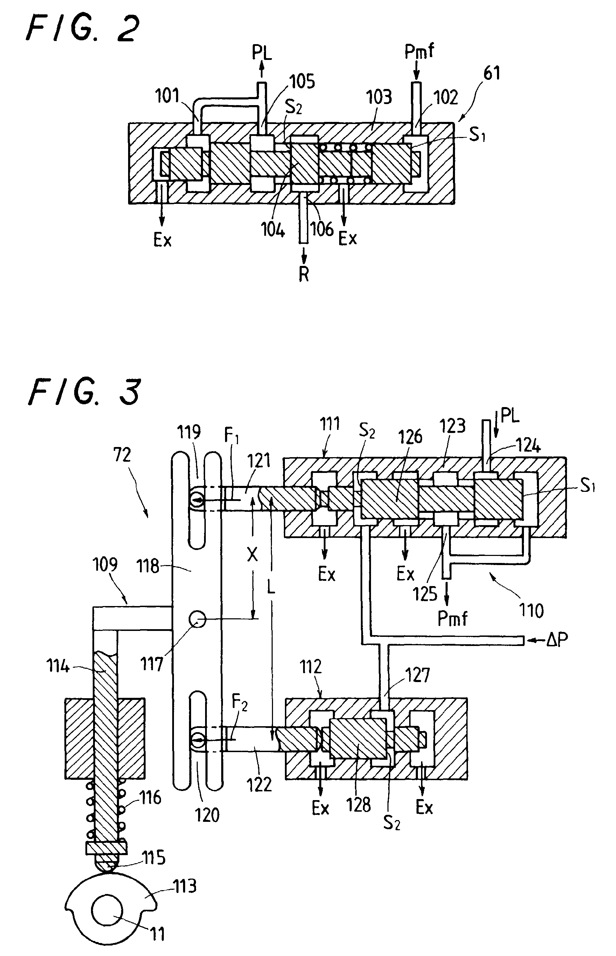

The line-pressure control valve 61 shown in FIG. 2 is a relief valve arranged on the delivery side of the hydraulic pump 60. The instant the line-pressure PL rises beyond a preselected pressure $PL_0$, the relief valve opens to permit the excess pressure to escape to a reservoir, thereby keeping the line-pressure PL at the preselected line-pressure $PL_0$. The line-pressure control valve 61 is made of a spool-type control valve having a valve spool 104 accommodated for sliding motion in a valve casing 103. The valve spool 104 is applied at the left side thereof with the line-pressure PL in a first port 101 while at the right side thereof with a corrected reference-pressure Pmf in a second port 102, which is an output of the line-pressure correction means 72. When the rise of the line-pressure PL causes a force pressing the valve spool 104 rightward in FIG. 2 to overcome a force moving the valve spool 104 leftward on the basis of the corrected reference-pressure Pmf, the valve spool 104 is moved to the right to open the line-pressure PL at an inlet port 105 to an outlet port 106, thereby permitting the line-pressure PL to escape to the reservoir. Thus, the line-pressure PL drops to a pressure in compliance with the corrected reference-pressure Pmf: PL = Pmf $\times$ area ratio $S_1/S_2$. An Ex port is to collect and recover fluid leaking out around the valve spool.

Referring next to FIG. 3, there is shown the detail of the line-pressure correction means 72, which outputs the corrected reference-pressure Pmf to be applied to the line-pressure control valve 61, on the basis of the pressure difference $\Delta P$ between the hydraulic pressures in the acceleration and deceleration cylinders of the hydraulic actuator for moving the trunnions in the axial direction of the pivotal axes. The line-pressure correction means 72 is comprised of a speed-ratio control system 109 to move a fulcrum depending on a pivoting angle $\theta$ through which the pivotal axis 11 of the trunnion 35 has turned, and a pressure difference control system 110 composed of a corrected reference-pressure setting valve 111 to create a first output $F_1$, and a hydraulic pressure energizing means 112 to create a second output $F_2$. The speed-ratio control system 109 is comprised of a cam 113 turning according to a pivoting angle $\theta$ through which the pivotal axis 11 of the trunnion 35 has turned, a push rod 114 having a follower 115 urged against the cam 113 by the action of a coiled spring 116 to yield a follower displacement in accordance with the cam profile, and a lever 118 supported at the fulcrum 117 for pivoting motion and made at the opposite ends thereof with slots 119, 120 in which fit a first rod 121 of the corrected reference-pressure setting valve 111 and a second rod 122 of the hydraulic pressure energizing means 112 for a freely sliding manner, each rod to each slot.

The corrected reference-pressure setting valve 111 is provided with an input port 124 applied with the line-pressure PL and an output port 125 through which is delivered the corrected reference-pressure Pmf. A first valve spool 126 connected with the first rod 121 is subjected at its rightward pressure-exposed end area $S_1$ to the corrected reference-pressure Pmf while at its leftward pressure-exposed area $S_2$ to the difference pressure $\Delta P$ representing the transmitted torque. The corrected reference-pressure Pmf is made reduced when the line-pressure PL is output through a clearance between the first valve spool 126 and the valve casing 123. Let a first output with which the first rod 121 pushes the lever 118 be $F_1$, the equilibrium of force is

$$F_1 = Pmf \cdot S_1 - \Delta P \cdot S_2 \qquad\qquad (Eq.4)$$

On the hydraulic pressure energizing means 112, moreover, the pressure difference $\Delta P$ entering an inlet port 127 acts on the pressure-exposed area $S_2$ of the second valve spool 128, with developing a second force $F_2$ to urge a second rod 122 leftwards. Thus, the second force $F_2$ is defined by

$$F_2 = \Delta P \cdot S_2 \qquad\qquad (Eq.5)$$

Let x = distance between the fulcrum 117 of the lever 118 and the first rod 121 of the corrected reference-pressure setting valve 111, and L = distance between the first rod 121 of the corrected reference-pressure setting valve 111 and the second rod 122 of the hydraulic pressure energizing means 112. Then, for equilibrium of moments of couples tending to rotate the lever 117 about the fulcrum 117, there is required

$$x \, F_1 = (L - x) \, F_2 \qquad\qquad (Eq.6)$$

When (Eq.4) and (Eq.5) are substituted in (Eq.6), the corrected reference-pressure Pmf can also be written as the amount proportional to lever ratio (L/x):

$$x \, F_1 = (L / x) \cdot (S_2 / S_1) \cdot \Delta P \qquad\qquad (Eq.7)$$

Now, let the cam 113 supported on the pivotal axis 11 of the trunnion 35 have the cam profile making the distance x inversely proportional to $\sin\theta$, and L is determined in a proper value. Then, the corrected reference-pressure Pmf can be written as:

$$Pmf = (At / Al) \cdot (2 / \mu_{t0}) \cdot \sin\theta \cdot (S_2 / S_1) \cdot \Delta P \qquad\qquad (Eq.8)$$

where At is an end area of a trunnion control piston, Al is a pressure-exposed area of the hydraulic loader, and $\mu_{t0}$ is a desired coefficient of traction.

The equilibrium on the valve spool 104 of the line-pressure control valve 61 shown in FIG. 2 gives

$$PL = (S_1 / S_2) \cdot Pmf \qquad\qquad (Eq.9)$$

Combining (Eq.8) and (Eq.9) yields the following equation to control the loading pressure PL of the hydraulically actuated loader:

$$PL = 2 \sin\theta \cdot (At / Al) \cdot \Delta P \, (1 / \mu_{t0}) \qquad\qquad (Eq.10)$$

Modifying (Eq.10) yields

$$\mu_{t0} = (2\sin\theta / PL \cdot Al) \cdot (\Delta P \cdot At) \qquad\qquad (Eq.11)$$

where $PL \cdot Al$ is the product of the line-pressure PL and the pressure-exposed area Al of the hydraulically actuated loader 12 and, thus, corresponds to the thrust force Fa exerted by the hydraulically actuated loader 12; and $\Delta P \cdot At$ is the product of the pressure difference $\Delta P$ in the hydraulic actuator 36 and the end area At of the trunnion control piston and, accordingly, represents a traction force Ft acting axially of the pivotal axes 11 of power rollers 6, 9. Thus, the above (Eq.11) may be also written as

$$\mu_{t0} = (2\sin\theta / Fa) \cdot Ft \qquad\qquad (Eq.11)$$

Moreover, since the contact pressure Fc at the areas in contact is given by Fa/2sinθ, the above (Eq.11) becomes

$$\mu_{t0} = Ft / (Fa / 2\sin\theta) = Ft / Fc \qquad (Eq.12)$$

It will be understood that it fits in with the definition of the coefficient of traction $\mu_t$.

As described just above, the present invention proposes to employ the hydro-mechanical construction such as the line-pressure correction means 72 shown in FIG. 3, which is applied with the line-pressure PL, pressure difference $\Delta P$ at the hydraulic actuator and pivoting angle θ of the trunnion 35 reflecting the speed ratio. According to the construction of the present invention, selecting adequately the relation between the distances L and x results in yielding the corrected reference pressure Pmf, which serves the reference pressure for the line-pressure control valve 61 to modify the line-pressure PL into the pressure exerted on the hydraulically actuated loader 12. Thus, the line-pressure correction means 72 may provides the output that keeps continually the desired coefficient of traction $\mu_{t0}$, irrespective of changes in speed ration and transmitted torque. Moreover, the Ft in the above equations agrees with the actual traction effort exerted at the areas in contact and, therefore, it may be expected to exclude uncertainties such as the estimation of the input torque by the control unit 47 and the contact pressure at the areas A in contact may be reduced to the minimum, compared with the prior construction.

As the present invention may be embodied in several forms without departing from the spirit of essential characteristics thereof, the present embodiment is therefore illustrative and not restrictive, since the scope of the invention is defined by the appended claims rather than by the description preceding them, and all changes that fall within meets and bounds of the claims, or equivalent of such meets and bounds are therefore intended to embraced by the claims.

## Claims

1. A toroidal continuously-variable transmission comprising an input disk(4,7) driven from an engine, an output disk (5,8) arranged confronting the input disk(4, 7) and connected with an output shaft, power rollers(6, 9) disposed between the confronting input and output disks(4,7,5,8) to come in frictional rolling-contact with them under contact pressure thereby to transmit rotation of the input disk(4,7) to the output disk(6,9) in a continuously variable manner, a hydraulically actuated loader(12) arranged on any one of the input and output disks(4,7,5,8) to develop the contact pressure at contact areas(A) between the power rollers (6,9) and disks(4,7,5,8), a trunnion(35) supporting thereon the power roller(6,9) for rotation and allowed to turn about a pivotal axis(11) to change speed ratio according to a shift in position of the contact areas (A), a hydraulically actuating means to move the trunnion(35) along an axial direction of the pivotal axis(11) to make the trunnion(35) pivot about the pivotal axis(11), a hydraulic power source to supply a line-pressure(PL) to apply regulated pressures to both the hydraulically actuated loader(12) and the hydraulically actuating means, a torque detector means for measuring a torque transmitted through the power rollers(6,9), and a line-pressure correction means(72) for modifying the line-pressure(PL) supplied from the hydraulic power source, depending on a pivoting angle (θ) of the trunnion(35) around the pivotal axis(11) and the transmitted torque measured at the torque detector means, thereby ensuring a constant coefficient of traction at the contact areas(A).

2. A toroidal continuously-variable transmission constructed as defined in claim 1, wherein the hydraulically actuating means is applied with a hydraulic pressure governed through a speed-ratio control valve(40), which regulates in pressure the line-pressure(PL) supplied from the hydraulic power source, depending on vehicle operating conditions.

3. A toroidal continuously-variable transmission constructed as defined in claim 1, wherein the hydraulically actuating means is a hydraulic actuator (36) having an acceleration cylinder chamber(38a) and a deceleration cylinder chamber(38b) to move the trunnion(35) axially of the pivotal axis(11), and the torque detector means is a pressure-difference detector valve(67,68) to find an absolute value of a pressure difference ($\Delta P$) between the acceleration cylinder chamber(38a) and the deceleration cylinder chamber(38b).

4. A toroidal continuously-variable transmission constructed as defined in claim 3, wherein the pressure-difference detector valve(67,68) is comprised of a first pressure-difference detector valve(67) to provide a first pressure difference($\Delta P_1$) of positive sense given by subtracting a hydraulic pressure(Pdwn) in the deceleration cylinder chamber(38b) from a hydraulic pressure(Pup) in the acceleration cylinder chamber(38a) while a vehicle is in driving condition, a second pressure-difference detector valve(68) to provide a second pressure difference ($\Delta P_2$) of positive sense given by subtracting a hydraulic pressure(Pup) in the acceleration cylinder chamber(38a) from a hydraulic pressure(Pdwn) in the deceleration cylinder chamber (38b) while a vehicle is permitted to coast, and a shuttle valve(73) supplied with the first and second pressure differences ($\Delta P_1$, $\Delta P_2$) to send a high hydraulic pressure.

5. A toroidal continuously-variable transmission constructed as defined in claim 3, wherein the line-pressure correction means(72) is comprised of a speed-ratio control system(109) having a lever(118) made to move according to the pivoting angle ($\theta$) of the trunnion(35), which is allowed to pivot depending on the speed ratio, and a pressure-difference control system(110) coming in engagement with the lever(118) of the speed-ratio control system(109) so as to allow to alter lever ratio, and subjecting the lever(118) to a force corresponding to the pressure difference ($\Delta P$), which occurs depending on the transmitted torque measured at the pressure-difference detector valve(67, 68), thereby developing a corrected reference pressure (Pmf) to modify the line-pressure(PL) according to a balance of the forces exerted on the lever(118).

6. A toroidal continuously-variable transmission constructed as defined in claim 5, wherein the speed-ratio control system(109) is composed of a cam(113) having a cam profile able to provide lift according to the pivoting angle ($\theta$) of the trunnion(35), a follower (115) coming in contact with the cam(113) to make a displacement corresponding to the lift according to the pivoting angle ($\theta$), and the lever(118) connected to the follower(115) to be allowed to pivot around a fulcrum(117), and the pressure-difference control system(110) is composed of a corrected reference-pressure setting valve(111) and a hydraulic pressure energizing means(112), the corrected reference-pressure setting valve(111) having a first valve spool(126) allowed to move based on both the corrected reference pressure (Pmf) obtained in the setting valve(111) itself and the pressure difference($\Delta P$) sensed at the pressure-difference detector valve(67,68), and a first rod(121) connected to the first valve spool(126) to communicate a first output ($F_1$) proportional to the corrected reference pressure(Pmf) to any one end of the lever(118), while the hydraulic pressure energizing means(112) having a second valve spool(128) allowed to move based on the pressure difference($\Delta P$) sensed at the pressure-difference detector valve(67,68), and a second rod(122) connected to the second valve spool (128) to communicate a second output($F_2$) proportional to the pressure difference ($\Delta P$) to the opposite end of the lever(118), and wherein the corrected reference-pressure setting valve(111) develops and outputs the corrected reference pressure(Pmf), which is a pressure proportional to the product of the pressure difference ($\Delta P$) and a ratio of a distance between the fulcrum (117) and the first rod(121) to a distance between the first and second rods(121,122).

7. A toroidal continuously-variable transmission constructed as defined in claim 5, wherein the line-pressure correction means(72) has a relief valve to relieve an excessive line-pressure beyond a desired line-pressure that corresponds to the corrected reference pressure(Pmf) issued depending on both the pivoting angle ($\theta$) of the trunnion (35) and the transmitted torque sensed at the torque detector means, thereby reducing and modifying the line-pressure(PL) to the desired line-pressure.

F/G. 1

# FIG. 2

# FIG. 3

# FIG. 4 (PRIOR ART)

EP 1 092 895 A2

## FIG. 5 (PRIOR ART)

## FIG. 6 (PRIOR ART)